# EUROPÄISCHE PATENTSCHRIFT

(11) **EP 2 643 195 B1**
(45) Veröffentlichungstag und Bekanntmachung des Hinweises auf die Patenterteilung: **14.06.2017**
(21) Anmeldenummer: 11782636.2
(22) Anmeldetag: 17.11.2011
(51) Int. Cl.: B60T 7/12, B60T 13/74, B60T 17/22, B60T 7/04, B60T 11/20, B60T 13/68

(54) **BREMSANLAGE FÜR KRAFTFAHRZEUGE**
BRAKE SYSTEM FOR MOTOR VEHICLES
SYSTÈME DE FREINAGE POUR VÉHICULES À MOTEUR

(30) Priorität: 26.11.2010 DE 102010062010; 14.11.2011 DE 102011086258
(43) Veröffentlichungstag der Anmeldung: 02.10.2013
(73) Patentinhaber: Continental Teves AG & Co. oHG, 60488 Frankfurt (DE)
(72) Erfinder: DRUMM, Stefan A., 55291 Saulheim (DE)
(86) Internationale Anmeldenummer: PCT/EP2011/070338
(87) Internationale Veröffentlichungsnummer: WO 2012/069353

(56) Entgegenhaltungen:
- WO-A1-01/72567
- DE-A1-102006 036 311
- DE-A1-102006 040 424
- DE-A1-102009 024 034
- GB-A- 2 050 540

## Beschreibung

Die vorliegende Erfindung betrifft eine Bremsanlage für Kraftfahrzeuge, die in einer "Brake-by-Wire" Betriebsart sowohl vom Fahrzeugführer als auch unabhängig vom Fahrzeugführer ansteuerbar ist, vorzugsweise in der "Brake-by-Wire" Betriebsart betrieben wird und in mindestens einer Rückfallbetriebsart betrieben werden kann, in der nur der Betrieb durch den Fahrzeugführer möglich ist, mit
a) einem Bremspedal zum Betätigen einer hydraulischen Kolben-Zylinder-Anordnung mit einem hydraulischen Kolben, auf den bei der Betätigung der Bremsanlage durch den Fahrzeugführer eine Betätigungskraft (Pedalkraft) ausgeübt wird und der in einem Gehäuse längs einer Betätigungsachse verschiebbar geführt wird,
b) einem hydraulisch betätigbaren, mittels eines Simulator-Freigabeventils freigebbaren bzw. absperrbaren Pedalwegsimulator,
c) einer Wegerfassungseinrichtung, die den Betätigungsweg des Kolbens erfasst,
d) einem Druckmittelvorratsbehälter,
e) einer elektrisch steuerbaren Druckquelle, die einen Bremssystemdruck abgibt,
f) einer Druckmodulationseinheit mit elektrisch steuerbaren Druckregelventilen zum Einstellen radindividueller Bremsdrücke, die aus dem Bremssystemdruck abgeleitet werden, wobei der Bremssystemdruck über eine Bremssystemdruckleitung den Eingangsanschlüssen der Druckregelventile zugeführt wird, die ihn im nicht angesteuerten Zustand abgeben bzw. weiterleiten,
g) den Kraftfahrzeugradbremsen zugeordneten Trennkolbeneinrichtungen, die auf einer ersten Trennkolbenfläche mit dem durch die Druckregelventile eingestellten beziehungsweise weitergeleiteten Druck beaufschlagt werden und den von einer zweiten Trennkolbenfläche ausgeübten Druck an die Kraftfahrzeugradbremsen weitergeben,
h) Ansteuerungselementen zum Ausüben der Betätigungskraft bzw. zur mechanischen Ansteuerung der Trennkolbeneinrichtungen, die mit dem Kolben in eine kraftübertragende Verbindung bringbar sind sowie
i) einer elektronischen Steuer- und Regeleinheit.

Bremsanlagen mit einem Pedalwegsimulator, dessen Simulatorkolben mechanisch mittels des Bremspedals betätigt wird, sind z.B. aus der DE 10 2006 036 311 A1 und WO 2001/72567 A1 bekannt.

Eine gattungsgemäße Bremsanlage ist aus der DE 10 2009 024 034 A1 bekannt. Bei der vorbekannten Bremsanlage wird der mit dem Bremspedal gekoppelte Kolben in einem weiteren hydraulischen Kolben größeren Durchmessers geführt, der als Rückhaltekolben bezeichnet wird. Am Rückhaltekolben, der in einem Gehäuse einen den Rückhaltekolben radial umgreifenden hydraulischen Rückhalteraum begrenzt, stützen sich den Trennkolbeneinrichtungen zugeordnete, stabförmige Kraftübertragungselemente ab. Als nachteilig werden der komplexe Aufbau der beschriebenen Betätigungsanordnung, sowie die damit verbundene, erhebliche axiale Baulänge angesehen.

Es ist daher Aufgabe der vorliegenden Erfindung, eine Vereinfachung der Betätigungsanordnung vorzuschlagen, die eine Verkürzung deren axialer Baulänge ermöglicht.

Diese Aufgabe wird erfindungsgemäß durch eine Bremsanlage gemäß Anspruch 1 gelöst.

Bevorzugte Ausführungsformen der Erfindung ergeben sich aus den Unteransprüchen und der nachfolgenden Beschreibung anhand einer Figur.

In der folgenden Beschreibung wird die vorliegende Erfindung unter Bezugnahme auf die beiliegende schematische Zeichnung an einem Ausführungsbeispiel erläutert. In der Zeichnung zeigt die einzige Figur den Aufbau einer Ausführungsform der erfindungsgemäßen Bremsanlage.

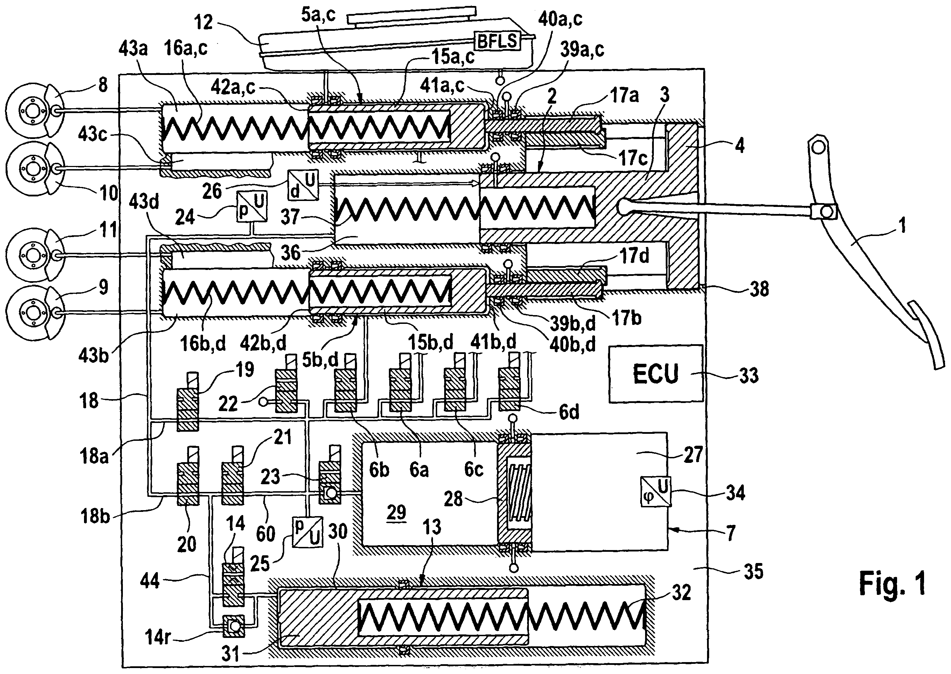

Die in Fig. 1 lediglich schematisch dargestellte Bremsanlage weist im Wesentlichen einen mittels eines Bremspedals 1 betätigbaren hydraulischen Kolben 3 auf, der einen Bestandteil einer Kolben-Zylinder-Anordnung bildet, die mit dem Bezugszeichen 2 versehen ist. Der Kolben 3, dessen Betätigungsweg mittels eines Wegsensors 26 überwacht wird, begrenzt eine hydraulische Druckkammer 36, die eine den Kolben 3 gegen einen Anschlag 38 vorspannende Rückstellfeder 37 aufnimmt. Der in der Druckkammer 36 durch Verschieben des Kolbens 3 aufgebaute Druck wird mittels eines Drucksensors 24 erfasst. Die Kolben-Zylinder-Anordnung 2 ist in einem Gehäuse 35 ausgebildet, das weitere Komponenten der erfindungsgemäßen Bremsanlage aufnimmt, die im nachfolgenden Beschreibungsteil erläutert werden. Die erfindungsgemäße Bremsanlage weist weiterhin dem Kolben 3 über eine mechanische sowie ein hydraulische Wirkkette nachgeschaltete Trennkolbeneinrichtungen 5a-5d auf, denen in der hydraulischen Wirkkette elektrisch steuerbare Druckregelventile 6a-6d vorgeschaltet sind und an die Fahrzeugbremsen 8-11 angeschlossen sind, einen Druckmittelvorratsbehälter 12, einen Pedalwegsimulator 13, eine elektrisch steuerbare hydraulische Druckquelle 7, sowie eine elektronische Steuer- und Regeleinheit 33. Dabei ist vorzugsweise jeder Radbremse 8-11 eine Trennkolbeneinrichtung 5a-5d zugeordnet. Eine Kraftübertragung zwischen einem am Kolben 3 ausgebildeten radialen Bund 4 und den Trennkolbeneinrichtungen 5a-5d erfolgt mittels mechanischer Ansteuerungselemente 17a-d, die als Kraftübertragungsstäbe ausgebildet sind und die sich in unbetätigtem Zustand der Bremsanlage in einem axialen Abstand vom Bund 4 befinden. Der Abstand stellt dabei vorzugsweise einen Freigang dar, der dem in der Betriebsart "Brake-by-wire" möglichen Betätigungsweg des Bremspedals 1 entspricht. Zur Abdichtung der Ansteuerungselemente 17a-d im Gehäuse 35 sind Dichtringe vorgesehen, die mit den Bezugszeichen 39a-39d, 40a-40d versehen sind. Zwischen den Ansteuerungselementen 17a-17d und dem Kolben 3 können nicht dargestellte Dämpfungselemente angeordnet werden.

Zur besseren Übersicht sind nur die ersten beiden Trennkolbeneinrichtungen 5a, 5b dargestellt und ausführlich beschrieben, während die Bezugszeichen 5c, 5d den anderen zwei, in der Zeichnung nicht dargestellten Trennkolbeneinrichtungen zugeordnet sind. Die gezeigten Trennkolbeneinrichtungen 5a, 5b umfassen jeweils einen Trennkolben 15a, 15b, der jeweils eine erste Trennkolbenfläche 41a, 41b sowie eine zweite Trennkolbenfläche 42a, 42b aufweist, und der entgegen seiner Betätigungsrichtung durch jeweils eine Druckfeder 16a, 16b vorgespannt sind. Die druckmäßige Zuordnung der Trennkolbenflächen 41a, 41b sowie 42a, 42b ist dabei vorzugsweise derart getroffen, dass die erste Trennkolbenfläche 41a, 41b mit dem von den Druckregelventilen 6a, 6b eingestellten Druck (radindividueller Druck) beaufschlagbar ist, während die Trennkolbenfläche 42a, 42b dem Aufbau eines hydraulischen Druckes in den Radbremsen 8, 9 dient. Von den Trennkolben 15a, 15b begrenzte Druckräume 43a, 43b sind mittels absperrbarer hydraulischer Verbindungen mit dem Druckmittelvorratsbehälter 12 verbunden, wodurch im unbetätigten Zustand der Bremsanlage ein Austausch von Druckmittel zwischen den ansonsten getrennten hydraulischen Kreisen und dem Druckmittelvorratsbehälter 12 ermöglicht wird.

Der vorhin erwähnte Pedalwegsimulator 13, der dem Fahrer im Brake-by-Wire-Modus das gewohnte Bremspedalgefühl vermittelt, besteht in der gezeigten bevorzugten, für die Erfindung aber nicht notwendigerweise verbindlichen Ausgestaltung aus einer hydraulischen Simulatorkammer 30, einem Simulatorkolben 31 sowie einer Simulatorfeder 32, die durch ein hydraulisches Verschieben des Simulatorkolbens 31 komprimiert wird. Die Betätigung des Pedalwegsimulators 13 erfolgt durch die Betätigung der vorhin erwähnten Kolben-Zylinder-Anordnung 2, deren Druckkammer 36 mittels hydraulischer Verbindungen 18, 44 mit der Simulatorkammer 30 verbunden ist. Dabei ist in der Verbindung 44 ein stromlos geschlossenes Simulator-Freigabeventil 14 eingefügt, dem ein zur Simulatorkammer 30 schließendes Rückschlagventil 14r parallel geschaltet ist. Das Simulator-Freigabeventil 14 ist mit einer Blende versehen, so dass bei schneller Pedalbetätigung durch die Drosselung des Simulatorvolumenstroms bereits bei geringem Pedalhub ein mit dem Drucksensor 24 detektierbarer Druck vorliegt, der die Elektronikeinheit 33 zu einer schnellen Aktivierung der Radbremsen 8-11 veranlasst. Durch das parallel geschaltete Rückschlagventil 14r wird erreicht, dass beim Lösen des Pedals 1 der Druckmittelrückfluss vom Simulator 13 zur Kolben-Zylinder-Anordnung 2 ungedrosselt erfolgt, so dass ein unangenehmes Abheben des Fahrerfußes vom Pedal vermieden wird.

Im Brake-by-Wire-Modus kommuniziert die Kolben-Zylinder-Anordnung 2 hydraulisch mit dem Pedalwegsimulator 13 über einen durch ein Bestromen der Elektromagnetventile 14, 19 und 21 festgelegten hydraulischen Pfad, der aus den Verbindungen 18 und 44 besteht. In der Rückfallbetriebsart sind dagegen alle Ventile unbestromt, so dass die hydraulische Verbindung 44 zum Pedalwegsimulator 13 gesperrt ist. In dieser Betriebsart ist die hydraulische Verbindung 18 ein Bestandteil der hydraulischen Wirkkette vom Pedal zu den Radbremsen. Bei einer möglichen Leckage in diesem Bereich fällt das Bremspedal um einen dem erwähnten axialen Freigang zwischen Bund 4 und Ansteuerungselementen 17a-17d entsprechenden Leerweg durch. Nach einem Überfahren dieses Leerweges sind die Radbremsen vermöge der Ansteuerungselemente betätigbar. Eine andere Fehlermöglichkeit der Wirkkette im Bereich der hydraulischen Verbindung 18 ist ein ungewollter Verschluss dieser Verbindung. Dieser Fehler ist kritischer als die erstgenannte Fehlermöglichkeit einer Leckage, weil dadurch die Kolben-Zylinder-Anordnung 2 und mithin das Bremspedal 1 blockiert würde. Daher weist die hydraulische Verbindung 18 zur sicheren Verbindung der Kolben-Zylinder-Anordnung 2 mit einer Bremssystemdruckleitung 60 erfindungsgemäß einen zweikreisig ausgeführten Abschnitt auf, wobei einer der beiden Kreise 18a mit einem ersten Absperrventil 19 und der andere Kreis 18b mit einem zweiten Absperrventil 21 separat absperrbar ist.

An die Bremssystemdruckleitung 60 sind die Druckregelventile 6a-6d angeschlossen, die im Betrieb in der Rückfallebne den Bremssystemdruck unverändert an die Kraftfahrzeugradbremsen 8-11 weitergeben.

Weiterhin ist in der Zeichnung erkennbar, dass die vorhin erwähnte elektrisch steuerbare Druckquelle 7 als ein elektrohydraulischer Aktuator ausgebildet ist, dessen Kolben 28 mittels eines schematisch angedeuteten Elektromotors 27 über ein Rotations-Translations-Getriebe betätigbar ist. Der vom Kolben 28 zurückgelegte Weg wird durch einen Sensor überwacht, der das Bezugszeichen 34 trägt und dessen Signal den Volumenausstoß der Druckquelle 7 repräsentiert. Der Kolben 28 begrenzt eine Druckkammer 29, an deren hydraulischen Ausgang die Bremssystemdruckleitung 60 angeschlossen ist, in die ein in Strömungsrichtung zur Druckquelle 7 absperrbares, elektromagnetisch betätigbares Ventil 23 eingefügt ist. An die Bremssystemdruckleitung 60 sind einerseits wie bereits erwähnt die Eingangsanschlüsse der Druckmodulationsventile 6a-6d und andererseits die vorhin erwähnten Kreise der hydraulischen Verbindung 18 angeschlossen. Außerdem ist die Bremssystemdruckleitung 60 über ein elektromagnetisch betätigbares, stromlos geschlossenes 2/2-Wegeventil 22 mit dem Druckmittelvorratsbehälter 12 verbindbar. Auf diesem Wege kann Druckmittel, das bei einem schnellen Zurückfahren des elektrohydraulischer Aktuators möglicherweise über die Manschettendichtringe im Aktuator und den Trennkolbeneinrichtungen aus dem Druckmittelvorratsbehälter angesaugt wurde, wieder dorthin abgelassen werden. Über ein weiteres, stromlos offenes 2/2-Wegeventil 20 ist die hydraulische Verbindung vom Leitungsabschnitt 18 mit dem zum Pedalwegsimulator 13 führenden Leitungsabschnitt 44 absperrbar. Dieses Ventil ermöglicht es, das Simulatorfreigabeventil 14 sowie das ihm parallel geschaltete Rückschlagventil 14r auf ihre leckagefreie Absperrfunktion bei unbestromtem Ventil 14 zu überprüfen, indem die Elektromagnetventile 19, 20, 6a, 6b, 6c, 6d bestromt werden, wobei das Ventil 21 unbestromt bleibt und die elektrisch steuerbare Druckquelle 7 einen Prüfdruck aufbaut. Dem Erfassen des von der Druckquelle 7 bereitgestellten und in der Bremssystemdruckleitung 60 vorliegenden Druckes dient ein zweiter Drucksensor 25 und das von der Druckquelle 7 abgegebene Volumen wird vom Sensor 34 erfasst. Damit kann durch den vorstehend beschriebenen Test festgestellt werden, ob beim Anlegen des Prüfdrucks an die Ventile 14, 14r Druckmittel in den Simulator 13 entweicht.

Die Funktionsweise der erfindungsgemäßen Bremsanlage ergibt sich für den auf dem einschlägigen technischen Gebiet tätigen Fachmann aus dem Offenbarungsgehalt der vorliegenden Patentanmeldung und braucht deswegen nicht weiter erläutert zu werden.

## Patentansprüche

1. Bremsanlage für Kraftfahrzeuge, die in einer "Brake-by-Wire" Betriebsart sowohl vom Fahrzeugführer als auch unabhängig vom Fahrzeugführer ansteuerbar ist, vorzugsweise in der "Brake-by-Wire" Betriebsart betrieben wird und in mindestens einer Rückfallbetriebsart betrieben werden kann, in der nur der Betrieb durch den Fahrzeugführer möglich ist, mit
a) einem Bremspedal (1) zum Betätigen einer hydraulischen Kolben-Zylinder-Anordnung (2) mit einem hydraulischen Kolben (3), auf den bei der Betätigung der Bremsanlage durch den Fahrzeugführer eine Betätigungskraft (Pedalkraft) ausgeübt wird und der in einem Gehäuse (35) längs einer Betätigungsachse verschiebbar geführt wird,
b) einem hydraulisch betätigbaren, mittels eines Simulator-Freigabeventils (14) freigebbaren bzw. absperrbaren Pedalwegsimulator (13),
c) einer Wegerfassungseinrichtung (26), die den Betätigungsweg des Kolbens (3) erfasst,
d) einem Druckmittelvorratsbehälter (12),
e) einer elektrisch steuerbaren Druckquelle (7), die einen Bremssystemdruck abgibt,
f) einer Druckmodulationseinheit mit elektrisch steuerbaren Druckregelventilen (6a-6d) zum Einstellen radindividueller Bremsdrücke, die aus einem Bremssystemdruck abgeleitet werden, wobei der Bremssystemdruck über eine Bremssystemdruckleitung (60) den Eingangsanschlüssen der Druckregelventile (6a-6d) zugeführt wird, die ihn im nicht angesteuerten Zustand abgeben bzw. weiterleiten,
g) den Kraftfahrzeugradbremsen (8, 9, 10, 11) zugeordneten Trennkolbeneinrichtungen (5a-5d), die auf einer ersten Trennkolbenfläche (41a-41d) mit dem durch die Druckregelventile (6a-6d) eingestellten beziehungsweise weitergeleiteten Druck beaufschlagt werden und den von einer zweiten Trennkolbenfläche (42a-42d) ausgeübten Druck an die Kraftfahrzeugradbremsen (8, 9, 10, 11) weitergeben,
h) Ansteuerungselementen (17a-17d) zum Ausüben der Betätigungskraft bzw. zur mechanischen Ansteuerung der Trennkolbeneinrichtungen (5a-5d), die mit dem Kolben (3) in eine kraftübertragende Verbindung bringbar sind, sowie
i) einer elektronischen Steuer- und Regeleinheit (33), wobei
j) der Kolben (3) im Gehäuse (35) unmittelbar geführt wird.

2. Bremsanlage nach Anspruch 1, **dadurch gekennzeichnet, dass** die Führung des Kolbens (3) im Gehäuse (35) mittels eines radialen Bundes (4) erfolgt, der der Ansteuerung der Trennkolbeneinrichtungen (5a-5d) dient.

3. Bremsanlage nach Anspruch 2, **dadurch gekennzeichnet, dass** zwischen dem Bund (4) und den Kraftübertragungselementen (17a-17d) ein axialer Freigang vorgesehen ist, der dem in der "Brake-by-wire" Betriebsart möglichen Betätigungsweg des Bremspedals (1) entspricht.

4. Bremsanlage nach einem der vorhergehenden Ansprüche, **dadurch gekennzeichnet, dass** zwischen der Kolben-Zylinder-Anordnung (2) und der Bremssystemdruckleitung (60) eine hydraulische Verbindung (18) vorgesehen ist, die durch elektromagnetisch betätigbare Absperrventile (19, 20) absperrbar ist.

5. Bremsanlage nach Anspruch 4, **dadurch gekennzeichnet, dass** die hydraulische Verbindung (18) in der "Brake-by-Wire" Betriebsart abgesperrt und in der Rückfallbetriebsart offen ist.

6. Bremsanlage nach Anspruch 4 oder 5, **dadurch gekennzeichnet, dass** die Verbindung (18) einen zweikreisig ausgeführten Abschnitt (18a, 18b) aufweist, wobei mit einem der Absperrventile (19) einer der beiden Kreise (18a) und mit einem anderen der Absperrventile (20) der andere Kreis (18b) separat absperrbar ist.

7. Bremsanlage nach einem der vorhergehenden Ansprüche, **dadurch gekennzeichnet, dass** ein erster Drucksensor (24) zum Erfassen des Druckes der Kolben-Zylinder-Anordnung (2) und ein zweiter Drucksensor (25) zum Erfassen des Bremssystemdruckes vorgesehen sind.

8. Bremsanlage nach einem der vorhergehenden Ansprüche, **dadurch gekennzeichnet, dass** ein Sensor (34) vorgesehen ist, dessen Signal den Volumenausstoß der steuerbaren Druckquelle (7) repräsentiert.

9. Bremsanlage nach Anspruch 8, **dadurch gekennzeichnet, dass** der Sensor (34) als Weg- oder Winkelsensor ausgeführt ist, der einen Verfahrweg oder einen Verdrehwinkel eines Aktuators (27) der elektrisch steuerbaren Druckquelle (7) erfasst.

10. Bremsanlage nach einem der vorhergehenden Ansprüche, **dadurch gekennzeichnet, dass** die elektrisch steuerbare Druckquelle (7) über ein in Strömungsrichtung zur Druckquelle (7) absperrbares, elektromagnetisch betätigbares Ventil (23) mit der Bremssystemdruckleitung (60) hydraulisch verbunden ist.

11. Bremsanlage nach einem der vorhergehenden Ansprüche, **dadurch gekennzeichnet, dass** der Pedalwegsimulator (13) über ein die Durchströmrichtung zum Pedalwegsimulator (13) stromlos absperrendes Simulator-Freigabeventil (14) mit einem hydraulischen Leitungsabschnitt (44) verbunden ist, der über das stromlos offene Absperrventil (20) mit dem Leitungsabschnitt (18) und über ein stromlos offenes Absperrventil (21) mit der Bremssystemdruckleitung (60) hydraulisch verbunden ist.

12. Bremsanlage nach Anspruch 11, **dadurch gekennzeichnet, dass** das stromlose Absperren des Simulator-Freigabeventils (14) durch ein Beaufschlagen mit einem Prüfdruck überprüfbar ist, wobei weder die hydraulische Kolben-Zylinder-Anordnung (2) noch die Trennkolbeneinrichtungen (5a-5d) samt den angeschlossenen Radbremsen (8, 9, 10, 11) mit dem Prüfdruck beaufschlagt werden.

13. Bremsanlage nach Anspruch 12, **dadurch gekennzeichnet, dass** zum Prüfen der Dichtigkeit des unbestromten Simulator-Freigabeventils (14) die Elektromagnetventile (19, 20, 6a, 6b, 6c, 6d) geschlossen werden, die elektrisch steuerbare Druckquelle (7) den vom Drucksensor (25) überwachten Prüfdruck aufbaut und mit Hilfe des Sensors (34) der Volumenausstoß der Druckquelle (7) überwacht wird.

14. Bremsanlage nach Anspruch 13, **dadurch gekennzeichnet, dass** beim Auftreten eines Volumenausstoßes, der über diejenige Volumenaufnahme hinausgeht, die durch die Nachgiebigkeit der beteiligten Hydraulikräume bedingt ist, auf eine Leckage geschlossen wird.

15. Bremsanlage nach einem der vorhergehenden Ansprüche, **dadurch gekennzeichnet, dass** die Bremsanlage als Kompaktanlage ausgebildet ist, bei der die Kolben-Zylinder-Anordnung (2), die Trennkolbeneinrichtungen (5a-5d), die Druckmodulationseinheit (6a-6d), die Trenn- (19, 20, 21) und Zuschaltventile (14, 22, 23), der Pedalwegsimulator (13), die steuerbare Druckquelle (7) und die elektronische Steuer- und Regeleinheit (33) eine Baueinheit bilden.

## Claims

1. Brake system for motor vehicles which, in a brake-by-wire operating mode, can be activated both by the vehicle driver and also independently of the vehicle driver, is preferably operated in the brake-by-wire operating mode and can be operated in at least one fall-back operating mode in which only operation by the vehicle driver is possible, comprising:
a) a brake pedal (1) for actuating a hydraulic piston-cylinder arrangement (2) having a hydraulic piston (3) on which an actuating force (pedal force) is exerted when the brake system is actuated by the vehicle driver and which is guided displaceably in a housing (35) along an actuation axis,
b) a hydraulically actuable pedal travel simulator (13) which is releasable and blockable by means of a simulator release valve (14),
c) a travel detection device (26) which detects the actuation travel of the piston (3),
d) a pressure medium reservoir (12),
e) an electrically controllable pressure source (7) which delivers a brake system pressure,
f) a pressure modulation unit having electrically controllable pressure regulating valves (6a-6d) for adjusting wheel-individual brake pressures which are derived from a brake system pressure, the brake system pressure being supplied via a brake system pressure line (60) to the inlet connections of the pressure regulating valves (6a-6d) which deliver or transmit the brake system pressure in the unactivated state,
g) dividing piston devices (5a-5d) which are associated with the motor vehicle wheel brakes (8, 9, 10, 11) and are subjected on a first dividing piston surface (41a-41d) to the pressure set or transmitted by the pressure regulating valves (6a-6d) and which transmit the pressure exerted by a second dividing piston surface (42a-42d) to the motor vehicle wheel brakes (8, 9, 10, 11),
h) activating elements (17a-17d) for exerting the actuating force or for mechanically activating the dividing piston devices (5a-5d), which activating elements (17a-17d) can be brought into force-transmitting connection with the piston (3), and
i) an electronic control and regulation unit (33),
wherein
j) the piston (3) is guided directly in the housing (35).

2. Brake system according to Claim 1, **characterized in that** the piston (3) is guided in the housing (35) by means of a radial collar (4) which serves to activate the dividing piston devices(5a-5d).

3. Brake system according to Claim 2, **characterized in that** an axial free clearance which corresponds to the possible actuation travel of the brake pedal (1) in the brake-by-wire operating mode is provided between the collar (4) and the force transmitting elements (17a-17d).

4. Brake system according to any one of the preceding claims, **characterized in that** a hydraulic connection (18) which is blockable by electromagnetically actuable shut-off valves (19, 20) is provided between the piston-cylinder arrangement (2) and the brake system pressure line (60).

5. Brake system according to Claim 4, **characterized in that** the hydraulic connection (18) is blocked in the brake-by-wire operating mode and is open in the fall-back operating mode.

6. Brake system according to Claim 4 or 5, **characterized in that** the connection (18) has a section (18a, 18b) of dual-circuit configuration, one of the two circuits (18a) being blockable separately with one of the shut-off valves (19) and the other circuit (18b) with another of the shut-off valves (20).

7. Brake system according to any one of the preceding claims, **characterized in that** a first pressure sensor (24) is provided for detecting the pressure of the piston-cylinder arrangement (2) and a second pressure sensor (25) is provided for detecting the brake system pressure.

8. Brake system according to any one of the preceding claims, **characterized in that** a sensor (34), the signal of which represents the discharge volume of the controllable pressure source (7), is provided.

9. Brake system according to Claim 8, **characterized in that** the sensor (34) is in the form of a travel or angle sensor which detects a travel distance or a rotational angle of an actuator (27) of the electrically controllable pressure source (7).

10. Brake system according to any one of the preceding claims, **characterized in that** the electrically controllable pressure source (7) is hydraulically connected to the brake system pressure line (60) via an electromagnetically actuable valve (23) which can be shut off in the flow direction to the pressure source (7).

11. Brake system according to any one of the preceding claims, **characterized in that** the pedal travel simulator (13) is connected, via a simulator release valve (14) which blocks the flow direction to the pedal travel simulator (13) when unenergized, to a hydraulic line section (44) which is hydraulically connected, via the shut-off valve (20) which is open when unenergized, to the line section (18), and via a shut-off valve (21) which is open when unenergized, to the brake system pressure line (60).

12. Brake system according to Claim 11, **characterized in that** the shutting-off of the simulator release valve (14) when unenergized can be tested by being subjected to a test pressure while neither the hydraulic piston-cylinder arrangement (2), nor the dividing piston devices (5a-5d) together with the connected wheel brakes (8, 9, 10, 11), are subjected to the test pressure.

13. Brake system according to Claim 12, **characterized in that**, in order to test the fluid-tightness of the unenergized simulator release valve (14), the solenoid valves (19, 20, 6a, 6b, 6c, 6d) are closed, the electrically controllable pressure source (7) builds up the test pressure monitored by the pressure sensor (25), and the discharge volume of the pressure source (7) is monitored by means of the sensor (34).

14. Brake system according to Claim 13, **characterized in that**, when a volume discharge occurs which exceeds the volumetric capacity determined by the resilience of the hydraulic chambers concerned, it is concluded that leakage is present.

15. Brake system according to any one of the preceding claims, **characterized in that** the brake system is configured as a compact system in which the piston-cylinder arrangement (2), the dividing piston devices (5a-5d), the pressure modulation unit (6a-6d), the shut-off valves (19, 20, 21) and switch-on valves (14, 22, 23), the pedal travel simulator (13), the controllable pressure source (7) and the electronic control and regulation unit (33) form one constructional unit.

## Revendications

1. Installation de frein pour véhicules automobiles, apte à être commandée en mode "brake by wire" tant par le conducteur du véhicule qu'indépendamment du conducteur du véhicule, et utilisée de préférence en mode "brake by wire" et pouvant être utilisée en au moins un mode de recul dans lequel seul le fonctionnement commandé par le conducteur du véhicule est possible, l'installation présentant :
a) une pédale de frein (1) qui actionne un ensemble hydraulique (2) à cylindre et piston présentant un piston hydraulique (3) sur lequel une force d'actionnement (force de pétale) est exercée par le conducteur lors de l'actionnement de l'installation de frein et guidé à coulissement dans un boîtier (35) le long d'un axe d'actionnement,
b) un simulateur (13) de course de pédale qui peut être activé hydrauliquement et activé ou bloqué au moyen d'une soupape (14) d'activation de simulateur,
c) un dispositif (26) de saisie de course qui saisit la course d'actionnement du piston (3),
d) un récipient (12) de réserve de fluide sous pression,
e) une source de pression (17) commandée électriquement et délivrant une pression au système de freinage,
f) une unité de modulation de pression dotée de soupapes (6a-6d) de régulation de pression commandées électriquement, qui établissent séparément pour chaque roue des pressions de freinage provenant d'une pression du système de freinage, la pression du système de freinage étant amenée au raccordement d'entrée des soupapes (6a-6d) de régulation de pression par un conduit (60) sous pression du système de freinage, les soupapes de régulation de pression délivrant ou conduisant cette pression à l'état non commandé,
g) des dispositifs (5a-5d) de piston de séparation associés aux freins (8, 9, 10, 11) des roues du véhicule automobile, la pression établie ou transmise par les soupapes (6a-6d) de régulation de pression étant appliquée sur une première surface (41a-41d) des pistons de séparation qui transmettent aux freins (8, 9, 10, 11) des roues du véhicule automobile la pression exercée par une deuxième surface (42a-42d) des pistons de séparation,
h) des éléments de commande (17a-17d) qui exercent la force d'actionnement ou qui commandent mécaniquement les dispositifs (5a-5d) de piston de séparation qui peuvent être mis en liaison de transfert de force avec le piston (3) et
i) une unité électronique (33) de commande et de régulation,
j) le piston (3) étant guidé directement dans le boîtier (35).

2. Installation de frein selon la revendication 1, **caractérisée en ce que** le guidage du piston (3) dans le boîtier (35) s'effectue au moyen d'un collet radial (4) qui sert à commander le dispositif (5a-5d) de piston de séparation.

3. Installation de frein selon la revendication 2, **caractérisée en ce qu'**entre le collet (4) et les éléments (17a-17d) de transfert de force est prévu un passage axial libre qui correspond au parcours d'actionnement de la pédale de frein (1) possible en mode "brake by wire".

4. Installation de frein selon l'une des revendications précédentes, **caractérisée en ce qu'**une liaison hydraulique (18) qui peut être bloquée par des soupapes de blocage (19, 20) actionnées électromagnétiquement est prévue entre l'ensemble (2) de cylindre et de piston et le conduit (6) de pression du système de frein.

5. Installation de frein selon la revendication 4, **caractérisée en ce que** la liaison hydraulique (18) est bloquée en mode "brake by wire" et est ouverte en mode de recul.

6. Installation de frein selon les revendications 4 ou 5, **caractérisée en ce que** la liaison (18) présente une partie (18a, 18b) réalisée en deux circuits, l'un des deux circuits (18a) pouvant être bloqué par une des soupapes de blocage (19) et le circuit (18b) pouvant être bloqué séparément par une autre des soupapes de blocage (20).

7. Installation de frein selon l'une des revendications précédentes, **caractérisée en ce qu'**un premier capteur de pression (24) est prévu pour saisir la pression de l'ensemble (2) de piston et de cylindre et un deuxième capteur de pression (25) est prévu pour saisir la pression du système de frein.

8. Installation de frein selon l'une des revendications précédentes, **caractérisée en ce qu'**un capteur (34) dont le signal représente le volume refoulé par la source de pression (7) asservie est prévu.

9. Installation de frein selon la revendication 8, **caractérisée en ce que** le capteur (34) est configuré comme capteur de course ou d'angle qui saisit la course parcourue ou l'angle de rotation de l'actionneur (27) de la source de pression (7) commandée électriquement.

10. Installation de frein selon l'une des revendications précédentes, **caractérisée en ce que** la source de pression (7) commandée électriquement est reliée hydrauliquement au conduit (60) sous pression du système de frein par l'intermédiaire d'une soupape (23) apte à être bloquée dans la direction d'écoulement en direction de la source de pression (7) et actionnée électromagnétiquement.

11. Installation de frein selon l'une des revendications précédentes, **caractérisée en ce que** le simulateur (13) de course de pédale est relié à une partie hydraulique (44) du conduit par l'intermédiaire d'une soupape (14) d'activation de simulateur qui bloque l'écoulement du courant en direction du simulateur (13) de course de pédale, cette section de conduit étant reliée hydrauliquement à la section (18) du conduit par l'intermédiaire de la soupape de blocage (20) ouverte en l'absence de courant et au conduit (60) sous pression du système de freinage par l'intermédiaire d'une soupape de blocage (21) ouverte en l'absence de courant.

12. Installation de frein selon la revendication 11, **caractérisée en ce que** le blocage de la soupape (14) d'activation du simulateur en l'absence de courant peut être vérifié en y appliquant une pression de test, la pression de test n'étant appliquée ni sur l'ensemble hydraulique (2) de piston et de cylindre ni sur le dispositif (5a-5d) de piston de séparation, y compris les freins de roue (8, 9, 10, 11) qui y sont raccordés.

13. Installation de frein selon la revendication 12, **caractérisée en ce que** pour vérifier l'étanchéité de la soupape (14) d'activation de simulateur en l'absence de courant, les soupapes électromagnétiques (19, 20, 6a, 6b, 6c, 6d) sont fermées, la source de pression (7) commandée électriquement établit la pression de test surveillée par le capteur de pression (25) et le volume expulsé par la source de pression (7) est surveillée à l'aide du capteur (34).

14. Installation de frein selon la revendication 13, **caractérisée en ce que** lorsque le volume expulsé dépasse le volume repris qui découle de la déformabilité des espaces hydrauliques concernés, il est conclu à la présence d'une fuite.

15. Installation de frein selon l'une des revendications précédentes, **caractérisée en ce que** l'installation de frein est configurée comme installation compacte dans laquelle l'ensemble (2) de piston et de cylindre, le dispositif (5a-5d) de piston de séparation, l'unité (6a-6d) de modulation de pression, les soupapes de séparation (19, 20, 21) et les soupapes de branchement (14, 22, 23), le simulateur (13) de course de pédale, la source de pression (7) asservie et l'unité électronique (33) de commande et de régulation forment un module.
